# FASCICULE DE BREVET EUROPEEN

(11) **EP 0 711 207 B1**
(45) Date de publication et mention de la délivrance du brevet: **12.03.1997**
(21) Numéro de dépôt: 94918876.7
(22) Date de dépôt: 16.06.1994
(51) Int. Cl.: B03B 9/06, B07B 13/00, H01B 15/00

(54) **PROCEDE DE RECUPERATION DE MATIERES**
VERFAHREN ZUR MATERIALRÜCKGEWINNUNG
METHOD FOR RECOVERING MATERIALS

(30) Priorité: 26.07.1993 FR 9309264
(43) Date de publication de la demande: 15.05.1996
(73) Titulaire: E. KERTSCHER S.A., CH-1462 Yvonand (CH)
(72) Inventeur: KERTSCHER, Eberhard, CH-1462 Yvonand (CH); BULUSCHEK, Bruno, CH-1026 Echandens (CH)
(74) Mandataire: Patry, Didier Marcel Pierre
(86) Numéro de dépôt international: EP9401961
(87) Numéro de publication internationale: WO9503127

(56) Documents cités:
- CH-A- 549 887
- DE-A- 3 129 638
- DE-C- 4 112 179

## Description

L'invention concerne un procédé de récupération de matières, et notamment un procédé de récupération de couples de matières du type plastique/métal à partir de déchets.

Plus particulièrement, cette invention concerne un procédé permettant la récupération, à partir de rebuts ou chutes de câbles gainés et/ou de fils isolés neufs ou usagés, à la fois de la matière plastique de gainage, isolante, qui enveloppe l'âme du câble ou du fil, et de la matière métallique formant l'âme en soi.

Un des procédés connus pour la récupération de ces matières formant les rebuts ou chutes de câbles gainés et de fils isolés consiste à éliminer à la flamme, c'est-à-dire essentiellement par combustion, la matière plastique formant la gaine, puis à récupérer l'âme quasi dénudée.

L'inconvénient majeur de ce procédé est que la matière plastique, en étant brûlée, est décomposée, si bien qu'il est impossible par la suite de la récupérer et de la recycler. En outre ce procédé entraîne l'émission de gaz polluants qu'il est nécessaire de traiter, pour se conformer aux législations sur la protection de l'environnement, par des installations industriellement lourdes et couteuses avant leur relâchement dans l'atmosphère, ce qui rend ce procédé peu rentable.

Un deuxième procédé connu consiste à dénuder mécaniquement les câbles ou fils à l'aide d'opérations mécaniques mises en oeuvre par une machine appropriée. Ce procédé ne donne malheureusement pas entière satisfaction car on constate qu'il reste sur les câbles ou fils dénudés des résidus de la matière formant la gaine et que des particules métalliques formant l'âme du câble se retrouvent dans la matière plastique. Les chutes dénudées et la matière plastique ainsi obtenues présentent une valeur commerciale moindre et leur capacité à être recyclées est nettement diminuée.

L'invention a donc pour but principal de remédier aux inconvénients de l'art antérieur susmentionné en fournissant un procédé de récupération de matières qui permette de récupérer les matières traitées en totalité et sous leur forme la plus pure possible, c'est-à-dire sans pollution réciproque.

A cet effet l'invention a pour objet un procédé de récupération de matières à partir de pièces à traiter, telles que des rebuts ou chutes de câbles gainés et/ou de fils isolés, neufs ou usagés, caractérisé en ce qu'il consiste :
- (a) à introduire lesdites pièces dans une enceinte étanche et à les disposer sur un support muni de moyens d'écoulement,
- (b) à éliminer l'oxygène contenu dans l'enceinte pour créer dans celle-ci une atmosphère neutre, non oxydante,
- (c) à élever la température à l'intérieur de l'enceinte jusqu'à atteindre une température de fusion de l'une des matières formant lesdites pièces, et jusqu'à ce que ladite matière s'écoule au travers des moyens d'écoulement,
- (d) à collecter ladite matière en fusion dans un bac de récupération maintenu à une température inférieure ou égale à ladite température de fusion,
- (e) puis à élever d'avantage la température à l'intérieur de l'enceinte pour amener ladite matière, restant sur les pièces, à se dégrader sous forme vaporisée ou gazeuse, et
- (f) à récupérer après refroidissement, d'une part, la matière écoulée dans ledit bac, et d'autre part, la ou lesdites matières restant sur le support.

Ce procédé diffère de la divulgation du document CH-A-549887 par l'étape (e) qui contribue à optimiser l'efficacité de séparation des matières métalliques des matières plastiques des pièces traitées
On comprend que grâce à ce procédé, il ne se produit qu'une altération faible de la matière, en particulier de la matière plastique mise sous fusion récoltée dans le bac de récupération, matière qui peut être intégralement recyclée en étant ensuite découpée en granulés et mélangée dans une proportion choisie à une matière "neuve" pour la production de nouvelles pièces, par exemple de nouveaux câbles gainés ou de nouveaux fils isolés.

On comprend en outre qu'il est possible, grâce à ce procédé, de traiter des volumes importants de matières en limitant considérablement les effets polluants. Ce procédé peut par ailleurs être mis en oeuvre facilement par un opérateur, grâce à une programmation appropriée des temps et des niveaux de chauffe de l'enceinte en fonction des couples de matière plastique/métal à traiter.

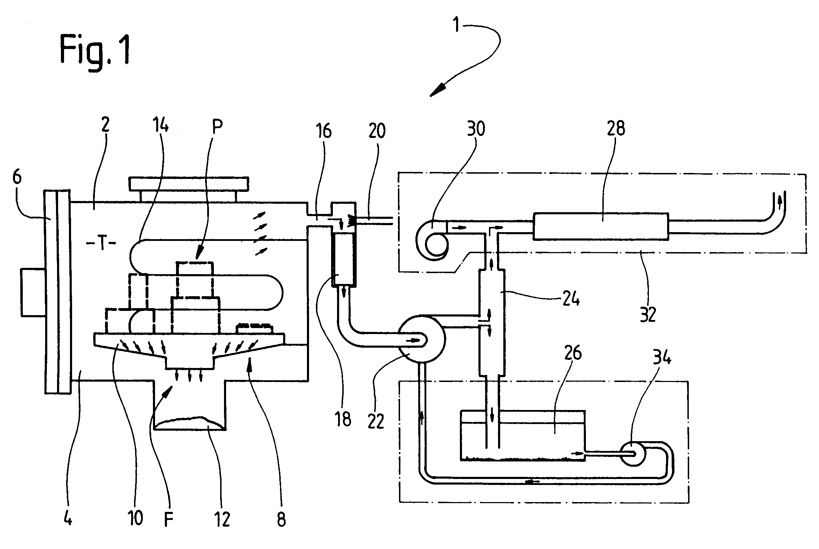

Mais d'autres caractéristiques et avantages de l'invention apparaîtront plus clairement à la lecture de la description qui suit d'un mode de réalisation de l'invention donné à titre d'exemple, à la lumière de la figure 1 annexée qui est une représentation schématique d'une installation permettant la mise en oeuvre du procédé de récupération de matière selon l'invention.

En se référant à la figure annexée, on décrira ci-après une installation permettant la mise en oeuvre du procédé de récupération selon l'invention, cette installation étant repérée par la référence générale 1.

L'installation 1 comporte une enceinte étanche 2 à l'intérieur de laquelle est ménagée une chambre de traitement 4 qui est fermée par une porte d'ouverture/fermeture référencée 6. L'agencement de la porte 6 et de l'enceinte 2 ne sera pas décrit ici de façon plus détaillée, car de structure classique.

On précisera toutefois que cet agencement est conçu de façon suffisamment hermétique pour que le niveau d'étanchéité de la chambre 4 permette d'atteindre un vide d'air approprié à l'intérieur de celle-ci, et de façon plus générale pour que la présence et l'introduction d'oxygène à l'intérieur de l'enceinte 2 soient évitées.

Dans la chambre 4 de l'enceinte 2 est disposé un support 8 sur lequel peuvent être disposées des pièces à traiter, et de façon avantageuse des rebuts ou chutes de câbles gainés et/ou de fils isolés neufs ou usagés, de structure au moins bi-matières, plastique/métal.

Ces pièces à traiter, qui dans cet exemple comportent au moins une âme en matière métallique, tel que du cuivre, et au moins une gaine isolante en matière plastique la recouvrant, sont ici repérées par la référence générale P.

Le support 8 est associé à des moyens d'écoulement et il est, pour cela, formé, par exemple, par une structure ajourée; ce support étant en outre associé à un collecteur 10 constitué par un ensemble de rigoles disposées directement sous le support 8.

Comme on le comprendra ci-après, le collecteur 10 permet de recevoir la matière à recycler mise sous fusion à l'état liquide ou semi-visqueux, par exemple la gaine en matière plastique, pour la transporter vers un bac de récupération 12.

Le bac de récupération 12 est destiné à recevoir directement par écoulement la matière en fusion qui est référencée F et qui est représentée de façon très schématique par un ensemble de flèches.

Ce bac de récupération 12 est en outre conçu de telle sorte qu'il soit accessible à l'utilisateur lorsque le procédé a pris fin, et il comporte, à cet effet, un sas de communication, non représenté, ainsi que des organes de manipulation classiques, tels que les poignées.

L'enceinte 2 comporte en outre des moyens de chauffage 14 qui sont conformés pour élever la température, référencée T, à l'intérieur de la chambre 4 de l'enceinte 2, dans un premier temps à un degré tel que l'une des matières choisie des pièces à traiter, notamment la matière plastique isolante, entre en fusion et qu'elle se détache de ces pièces progressivement et de façon continue, en phase liquide, visqueuse ou semi-visqueuse.

On précisera que ces moyens de chauffage sont en outre conformés pour élever la température T dans un deuxième temps à un degré encore plus élevé, c'est-à-dire à un degré tel que la matière plastique restant sur les pièces se dégrade sous forme vaporisée ou gazeuse.

Les moyens de chauffage 14 peuvent être constitués par des moyens d'émission d'un rayonnement infra-rouge, capables de chauffer par radiation thermique la chambre 4 de l'enceinte 2, ainsi que les pièces à traiter P.

Les moyens de chauffage 14 peuvent aussi être constitués par un réseau de résistances associées à la paroi non représentée de l'enceinte 2 pour élever la température à l'intérieur de la chambre 4 aux degrés et pendant les temps souhaités.

On constate donc ici que l'élévation de température à l'intérieur de la chambre 4 de l'enceinte 2 subie par les pièces à traiter P s'effectue en l'absence de flamme et en l'absence de chauffage direct sur ces pièces. Comme on le comprendra par la suite, ce chauffage est effectué de façon avantageuse en atmosphère neutre, non oxydante.

De cette façon, on amène à son état de fusion, et sans aucune combustion au moins l'une des matières des pièces à traiter, qui est dans l'exemple décrit un polymère thermoplastique, et plus généralement une matière synthétique organique telle que celles utilisées de façon classique pour le gainage/enrobage des câbles et fils électriques.

A titre d'exemple, la température T à l'intérieur de la chambre 4 de l'enceinte 2 peut être amenée jusqu'à une valeur de 500 °C et peut être choisie de façon appropriée en fonction des types de matière à recycler et des couples de matière plastique/métal formant les pièces à traiter.

A la sortie de l'enceinte 2 est disposée une tubulure d'échappement 16 qui est en communication directe avec la chambre étanche 4. La tubulure d'échappement 16 reçoit des émanations sous formes de vapeurs et/ou de gaz qui proviennent de la matière d'abord mise en fusion et des restes dégradés, et qui sont produites lors de l'élévation de température susmentionnée.

En aval de la tubulure d'échappement 16 est disposé un premier filtre 18 dans lequel est collectée une deuxième partie des déchets de la ou des matières à récupérer, mises sous fusion.

A ce stade, on collecte les émanations gazeuses émises par l'un ou les polymères formant la gaine des pièces traitées P.

Entre la tubulure 16 et le filtre 18 est disposé un conduit 20 par l'intermédiaire duquel est projeté, vers le filtre 18, un liquide de refroidissement permettant la précipitation des émanations gazeuses, ce liquide étant avantageusement de l'eau.

Ainsi, les émanations gazeuses provenant de la ou des matières à recycler d'abord mises sous fusion puis provenant des restes de celles-ci ensuite dégradés, sont précipitées et sont véhiculées vers une pompe à vide 22 constituée par exemple par une pompe à anneau d'eau de structure classique.

Cette pompe à anneau d'eau qui forme un mode de réalisation de moyens d'aspiration de l'installation 1 débouche vers une dérivation 24 qui véhicule le fluide de précipitation vers un bac de sédimentation 26, tandis que les émanations gazeuses résiduelles transportées par le liquide de refroidissement assurant la précipitation, sont véhiculées vers un catalyseur 28 à l'entrée duquel est disposé un ventilateur à air chaud 30. On a donc ainsi, à la sortie de la pompe à vide 22, des moyens 32 de traitement des gaz conçus pour répondre aux conditions de protection de l'environnement.

On notera que le bac de sédimentation 26 communique avec une pompe de recirculation 34 qui met en recirculation le fluide de refroidissement amené dans le bac de sédimentation 26 pour le propulser vers la pompe à vide 22 et pour former ainsi des moyens de recirculation d'eau à la sortie de la pompe à vide 22.

Le procédé de récupération de matière selon l'invention, qui est mis en oeuvre par l'installation 1 décrite ci-avant, est le suivant.

Tout d'abord, après avoir ouvert la porte 6 de l'enceinte 2, on introduit, à l'intérieur de la chambre de traitement 4, les pièces à traiter que l'on dispose sur le support 8.

Ensuite, dans une seconde étape, après avoir fermé hermétiquement l'enceinte 2, on élimine l'oxygène qui est contenu dans l'enceinte 2 en aspirant l'air contenu dans la chambre de traitement 4 jusqu'à obtenir, grâce à la pompe à vide 22, un niveau de vide suffisant dans cette chambre.

Dans une variante de ce procédé, on introduit dans la chambre de traitement 4 un gaz neutre, tel que de l'azote. On comprend qu'on crée ainsi dans l'enceinte 2 et plus particulièrement dans la chambre de traitement 4 une atmosphère neutre, non oxydante.

Ensuite, tout en maintenant cette atmosphère non oxydante dans la chambre de traitement 4 par une aspiration continue fournie par la pompe 22, on élève dans un premier temps la température T à l'intérieur de cette chambre jusqu'à atteindre et maintenir cette température à une température Tf, dite de fusion, à laquelle l'une des matières formant les pièces à traiter entre en phase liquide, visqueuse ou semi-visqueuse et coule de ces pièces, et plus particulièrement jusqu'à une température de mise en fusion de la ou des matières plastiques constituant lesdites pièces. Cette température Tf est comprise, pour les matières thermoplastiques, entre 200°C et 300°C.

On procède à cette étape jusqu'à ce que la matière mise en fusion s'écoule au travers des moyens d'écoulement du support 8.

Pendant cette étape, la matière mise sous fusion, à savoir la matière plastique de gainage et d'isolation des rebuts ou chutes de câbles ou fils qui sont traités, est collectée en s'écoulant au travers du collecteur 10 vers et dans le bac de récupération 12.

Ensuite, la température T à l'intérieur de la chambre 4 de l'enceinte 2 est dans un deuxième temps augmentée à une valeur plus élevée Tv, par exemple de l'ordre de 500°C, choisie de telle sorte que la matière plastique restant accrochée sur les pièces se dégrade sous forme de vapeur et/ou sous forme gazeuse. On précisera ici que le bac de récupération 12 ne subit pas ces élévations de température car il est disposé, dans l'installation 1, sous le support 8, en contact thermique avec l'extérieur, si bien qu'il n'est pas soumis au rayonnement des moyens de chauffage 14. Le bac de récupération 12 agit donc comme une trappe froide dans laquelle la matière qui s'est écoulée est protégée de la dégradation, puis figée. On comprend donc que lors du traitement des pièces P, le bac de récupération 12 est maintenu à une température inférieure ou égale à la température de fusion Tf.

Lorsque le procédé a pris fin, c'est-à-dire lorsque la ou les matières organiques synthétiques des pièces à traiter se sont détachées de la ou des matières métalliques qui restent ainsi nues sur le support 8, on diminue la température T à l'intérieur de la chambre de traitement 4 tout en la ramenant à la pression atmosphérique ou en réintroduisant dans celle-ci une quantité suffisante d'air extérieur.

Ensuite, on ouvre la porte de communication 6 pour récupérer la matière, ici la partie métallique de l'âme des câbles ou fils traités, se trouvant sur le support 8, puis par le sas non représenté de l'enceinte 2, on accède au bac de récupération 12 que l'on sort. On extrait ainsi la matière plastique qui, au préalable, avait été mise sous fusion et qui s'est solidifiée sous forme d'un "pain" recyclable.

On récupère donc après refroidissement, d'une part, la matière plastique qui s'est écoulée dans le bac de récupération 12, et d'autre part, la ou les matières métalliques qui restent sur le support 8.

On précisera ici que le bloc de matière plastique solidifié qui se trouve récupéré via le bac de récupération 12 doit être ensuite recyclé en étant découpé et mis sous forme de granulés. Cette matière recyclée peut ainsi être mélangée à une matière "neuve" pour la production d'autres pièces industrielles.

On précisera que dans un mode de réalisation préféré de ce procédé, on fait le vide à l'intérieur de la chambre de traitement 4 de l'enceinte 2 lors des étapes de traitement des matières, grâce aux moyens d'aspiration constitués par la pompe à vide 22.

En outre, au cours de ces étapes, on chauffe les pièces à traiter par radiation thermique.

On mentionnera en outre, que dans un autre mode de réalisation, on procède à l'élimination de l'oxygène dans la chambre 4 de l'enceinte 2 par introduction dans cette enceinte d'un gaz non oxydant, tel que l'azote.

De plus, dans ce procédé, on récupère à la sortie de l'enceinte 2, la matière en fusion qui s'échappe sous forme d'émanations gazeuses, formées pendant l'élévation de température de l'enceinte et pendant le maintien au moins à la température de fusion de l'une des matières à récupérer, en faisant circuler ces émanations gazeuses via le conduit 16 au travers du filtre de récupération 18. Comme on l'a expliqué ci-avant, dans cette étape, on précipite la matière initialement sous forme gazeuse, via un fluide de refroidissement projeté par le conduit 20 et aspiré par la pompe à anneau d'eau 22.

Ainsi, la matière sous forme gazeuse est précipitée en aval des moyens d'aspiration 22, tandis qu'elle est amenée dans le bac de sédimentation 26 qui lui est disposé en amont de ces moyens d'aspiration 22. Cette étape est effectuée par la recirculation du liquide de refroidissement entre les moyens d'aspiration 22, le bac de sédimentation 26 et la pompe de recirculation 34.

On précisera enfin que les gaz restant sont traités à la sortie des moyens d'aspiration 22 en étant mis en circulation au travers des moyens 32 de traitement des gaz comportant le catalyseur 28.

## Revendications

1. Procédé de récupération de matières à partir de pièces à traiter, telles que des rebuts ou des chutes de câbles gainés et/ou de fils isolés, neufs ou usagés, caractérisé en ce qu'il consiste :
- (a) à introduire lesdites pièces (P) dans une enceinte étanche (2) et à les disposer sur un support (8) muni de moyens d'écoulement ,
- (b) à éliminer l'oxygène contenu dans l'enceinte (2) pour créer dans celle-ci une atmosphère neutre, non oxydante,
- (c) à élever la température (T) à l'intérieur de l'enceinte jusqu'à atteindre une température (Tf) de fusion de l'une des matières formant lesdites pièces (P), et jusqu'à ce que ladite matière s'écoule au travers des moyens d'écoulement,
- (d) à collecter ladite matière en fusion dans un bac de récupération (12) maintenu à une température inférieure ou égale à ladite température de fusion (Tf),
- (e) puis à élever d'avantage la température à l'intérieur de l'enceinte (2) pour amener ladite matière, restant sur les pièces, à se dégrader sous forme vaporisée ou gazeuse, et
- (f) à récupérer après refroidissement, d'une part, la matière écoulée dans ledit bac (12), et d'autre part, la ou lesdites matières restant sur le support (8).

2. Procédé de récupération selon la revendication 1, caractérisé en ce que, dans l'étape (b), on fait le vide dans ladite enceinte (2), puis on maintient ce vide au moins au cours des étapes (c) à (e) à l'aide de moyens d'aspiration (22).

3. Procédé de récupération selon la revendication 2, caractérisé en ce que lesdits moyens d'aspiration (22) comprennent une pompe à vide.

4. Procédé de récupération selon la revendication 3, caractérisé en ce que lesdits moyens d'aspiration (22) comprennent une pompe du type à anneau d'eau.

5. Procédé de récupération selon l'une des revendications 1 à 4, caractérisé en ce que dans les étapes (c) et (e), on chauffe l'enceinte (2) par radiations thermiques.

6. Procédé selon la revendication 1, caractérisé en ce que dans l'étape (b) on élimine l'oxygène par introduction dans ladite enceinte (2) d'un gaz non oxydant.

7. Procédé de récupération selon la revendication 6, caractérisé en ce que le gaz non oxydant est l'azote.

8. Procédé de récupération selon la revendication 1, caractérisé en ce qu'au cours des étapes (c) à (e), on récupère, dans une étape (g), à une sortie de l'enceinte (2), la matière en fusion s'échappant sous forme gazeuse qui a été formée pendant l'élévation de température et pendant le maintien à ladite température de fusion.

9. Procédé de récupération selon la revendication 8, caractérisé en ce que dans l'étape (g) on précipite ladite matière sous forme gazeuse via un fluide de refroidissement.

10. Procédé selon les revendications 2 et 9, caractérisé en ce que dans l'étape (g) on précipite la matière sous forme gazeuse en aval desdits moyens d'aspiration (22), et en ce qu'on amène la matière précipitée dans un bac de sédimentation (26) disposé en amont de ces moyens d'aspiration.

## Claims

1. Method for recovering materials from parts to be processed, such as rejects or scraps of new or used sheathed cables and/or insulated wires, characterised in that it comprises the steps of :
(a) introducing said parts (P) into an airtight enclosed space (2) and placing them on a support (8) provided with draining means,
(b) removing the oxygen contained in the enclosed space (2) to create a neutral, non-oxidising atmosphere in the latter,
(c) raising the temperature (T) inside the enclosed space until it reaches a melting temperature (Tf) of one of the materials forming said parts (P), and until said material drains through the draining means,
(d) collecting said melted material in a recovery tank (12) maintained at a temperature less or equal to said melting temperature (Tf),
(e) further raising the temperature inside the enclosed space (2) to cause said material, remaining on the parts to dissipate in the form of vapour or gas, and
(f) recovering after cooling, on the one hand, the material drained into said tank (12), and on the other hand, the material or materials remaining on the support (8).

2. Recovery method according to claim 1, characterised in that, in step (b), the vacuum is created in said enclosed space (2), then this vacuum is maintained at least during steps (c) to (e) via suction means (22).

3. Recovery method according to claim 2, characterised in that said suction means (22) comprise a vacuum pump.

4. Recovery method according to claim 3, characterised in that said suction means (22) comprise a pump of the ring water type.

5. Recovery method according to one of claims 1 to 4, characterised in that in steps (c) and (e), the enclosed space (2) is heated by thermal radiation.

6. Recovery method according to claim 1, characterised in that in step (b) the oxygen is removed by introducing a non-oxidising gas into said enclosed space (2).

7. Recovery method according to claim 6, characterised in that the non-oxidising gas is nitrogen.

8. Recovery method according to claim 1, characterised in that during steps (c) to (e), one recovers, in a step (g), at an outlet of the enclosed space (2), the melted material escaping in the form of gas which is formed during the increase in the temperature and while said melting temperature is maintained.

9. Recovery method according to claim 8, characterised in that in step (g) said material in the form of gas is precipitated via a cooling fluid.

10. Method according to claims 2 and 9, characterised in that in step (g) the material in the form of gas is precipitated downstream of said suction means (22), and in that the precipitated material is brought into a sedimentation tank (26) arranged upstream of said suction means.

## Patentansprüche

1. Verfahren zum Wiedergewinnen von Materialien, ausgehend von zu behandelnden Teilen, wie Ausschußteilen oder Abfällen von ummantelten Kabeln und/oder isolierten Drähten, neu oder gebraucht, dadurch gekennzeichnet, daß es besteht aus:
- (a) Einsetzen der Teile (P) in einen abgedichteten Raum (2) und Deponieren derselben auf einem Support (8), der mit Ablaufmitteln versehen ist,
- (b) Entfernen des in dem Raum (2) enthaltenen Sauerstoffs zum Erzeugen in demselben einer neutralen nicht-oxidierenden Atmosphäre,
- (c) Erhöhen der Temperatur (T) im Inneren des Raumes bis zum Erreichen einer Temperatur (Tf) des Aufschmelzens eines der Materialien, welche die Teile (P) bilden, und bis das genannte Material über die Ablaufmittel abfließt,
- (d) Sammeln des geschmolzenen Materials in einem Rekuperator (12), der auf einer Temperatur unterhalb oder gleich der genannten Schmelztemperatur (Tf) gehalten wird,
- (e) nachfolgendes weiteres Erhöhen der Temperatur im Inneren des Raumes (2), um das genannte Material, das an den Teilen verblieben ist, in Dampf- oder Gasform zu zersetzen, und
- (f) Wiedergewinnen, nach Abkühlung, einerseits des in den Rekuperator (12) abgeflossenen Materials und andererseits des oder der auf dem Support (8) verbliebenen Materialien.

2. Wiedergewinnungsverfahren nach Anspruch 1, dadurch gekennzeichnet, daß im Schritt (b) man ein Vakuum in dem Raum (2) erzeugt und dann dieses Vakuum mindestens während der Schritte (c) bis (e) mit Hilfe von Absaugmitteln (22) aufrechterhält.

3. Wiedergewinnungsverfahren nach Anspruch 2, dadurch gekennzeichnet, daß die Absaugmittel (22) eine Vakuumpumpe umfassen.

4. Wiedergewinnungsverfahren nach Anspruch 3, dadurch gekennzeichnet, daß die Absaugmittel (22) eine Wasserringpumpe umfassen.

5. Wiedergewinnungsverfahren nach einem der Ansprüche 1 bis 4, dadurch gekennzeichnet, daß in den Schritten (c) und (e) man den Raum (2) durch thermische Strahlung aufheizt.

6. Verfahren nach Anspruch 1, dadurch gekennzeichnet, daß man im Schritt (b) den Sauerstoff durch Einspeisen eines nicht-oxidierenden Gases in den Raum (2) elimiert.

7. Wiedergewinnungsverfahren nach Anspruch 6, dadurch gekennzeichnet, daß das nicht-oxidierende Gas Stickstoff ist.

8. Wiedergewinnungsverfahren nach Anspruch 1, dadurch gekennzeichnet, daß während der Schritte (c) bis (e) man in einem Schritt (g) an einem Auslaß des Raumes (2) das geschmolzene Material wiedergewinnt, das in Gasform entweicht, welches während der Erhöhung der Temperatur gebildet worden war und während des Aufrechterhaltens der Schmelztemperatur.

9. Wiedergewinnungsverfahren nach Anspruch 8, dadurch gekennzeichnet, daß man im Schritt (g) das Material in Gasform über ein Kühlfluid ausfällt.

10. Verfahren nach Ansprüchen 2 und 9, dadurch gekennzeichnet, daß man im Schritt (g) das gasförmige Material stromab der Absaugmittel (22) ausfällt und daß man das ausgefällte Material in ein Sedimentationsgefäß (26) überführt, das stromauf dieser Absaugmittel angeordnet ist.
